# EUROPÄISCHE PATENTSCHRIFT

(11) **EP 1 895 318 B1**
(45) Veröffentlichungstag und Bekanntmachung des Hinweises auf die Patenterteilung: **16.12.2009**
(21) Anmeldenummer: 06017876.1
(22) Anmeldetag: 28.08.2006
(51) Int. Cl.: G01S 1/02

(54) **Verfahren zur Bestimmung der globalen Position**
Method for determining the global position
Procédé destiné à la détermination de la position globale

(43) Veröffentlichungstag der Anmeldung: 05.03.2008
(73) Patentinhaber: IBEO Automobile Sensor GmbH, 22179 Hamburg (DE)
(72) Erfinder: Fürstenberg, Kay, 20459 Hamburg (DE)
(74) Vertreter: Manitz, Finsterwald & Partner GbR

(56) Entgegenhaltungen:
- EP-A2- 0 427 431
- WO-A-2004/027434
- DE-A- 10 149 206
- JP-A- 2005 207 821

## Beschreibung

Die vorliegende Erfindung betrifft ein Verfahren zur Erhöhung der Genauigkeit der mittels eines insbesondere satellitengestützten Navigationssystems bestimmten globalen Position eines Nutzempfängers. Die Erfindung betrifft weiterhin eine entsprechende Vorrichtung.

Eine auf einem insbesondere satellitengestützten Navigationssystem basierende Bestimmung der globalen Position eines mobilen Nutzempfängers, beispielsweise eines Fahrzeugs, das mit einem GPS (Global Positioning System)-Empfänger ausgestattet ist, unterliegt in der Regel Genauigkeitsfehlern, die insbesondere durch atmosphärische Effekte verursacht werden, die sich als Folge variierender Ausbreitungsgeschwindigkeiten der von dem Navigationssystem ausgesandten Signale ergeben. Eine allein mittels eines Navigationssystems bestimmte globale Position ist in der Regel folglich fehlerbehaftet.

Um bei einem derartigen System Genauigkeitsfehler in der Positionsbestimmung zu verringern, werden stationäre Referenzempfänger, die auch als Basisstationen bezeichnet werden, eingesetzt, deren globale Positionen bekannt sind. Aus der bekannten globalen Position eines Referenzempfängers und der mittels des Navigationssystems bestimmten globalen Position des Referenzempfängers kann ein Positionsfehler der mittels des Navigationssystems bestimmten globalen Position in Form von Korrekturdaten berechnet werden. Der von einem stationären Referenzempfänger berechnete Positionsfehler kann dann an mobile Nutzempfänger übermittelt werden, um dort zur Korrektur der mittels des Navigationssystems bestimmten globalen Positionen der mobilen Nutzempfänger verwendet zu werden. Bei dem bekannten satellitengestützten Navigationssystem GPS wird dieses Verfahren als DGPS (Differential GPS) bezeichnet.

Derartige stationäre Referenzempfänger sind jedoch nicht flächendeckend vorhanden, so dass eine Korrektur einer mittels des Navigationssystems bestimmten globalen Position eines Nutzempfängers nicht überall möglich ist. Darüber hinaus ist die erreichbare Genauigkeit vom Abstand des mobilen Nutzempfängers zu einem stationären Referenzempfänger und damit von der Referenzempfänger-Dichte, d.h. der Anzahl der Referenzempfänger pro Flächeneinheit, abhängig.

JP 2005207821 offenbart ein Verfahren, bei dem für ein Fahrzeug mittels GPS und inertialer Navigation, bei der zur Navigation erforderliche Daten aus Parametern des Fahrzeugs selbst bestimmt werden, z.B. eine Geschwindigkeit oder ein Lenkwinkel, eine Position ermittelt wird, die auf Fahrbahndaten abgestimmt wird.

Der vorliegenden Erfindung liegt daher die Aufgabe zugrunde, ein Verfahren der eingangs genannten Art bereitzustellen, das die vorstehend genannten Nachteile beseitigt, sowie eine Vorrichtung zu schaffen, mittels derer das Verfahren durchführbar ist.

Die Aufgabe wird durch ein Verfahren mit den Merkmalen des Anspruchs 1 und insbesondere dadurch gelöst, dass mittels des Navigationssystems die globale Position eines mobilen Referenzempfängers bestimmt wird, mittels des mit zumindest einem Umfeldsensor versehenen mobilen Referenzempfängers wenigstens eine stationäre Landmarke erfasst wird, deren globale Position zumindest in einer Raumrichtung bekannt, insbesondere in einer digitalen Karte eingetragen ist, aus der bekannten globalen Position der erfassten stationären Landmarke, deren relativen Lage zu dem mobilen Referenzempfänger und der mittels des Navigationssystems bestimmten globalen Position des mobilen Referenzempfängers ein Positionsfehler der mittels des Navigationssystems bestimmten globalen Position des mobilen Referenzempfängers für wenigstens eine Raumrichtung berechnet wird, und der berechnete Positionsfehler von dem mobilen Referenzempfänger an den Nutzempfänger zur Erhöhung der Genauigkeit der mittels des Navigationssystems bestimmten globalen Position des Nutzempfängers übermittelt wird.

Die Erfindung zeichnet sich insbesondere dadurch aus, dass anstelle von oder zusätzlich zu stationären Referenzempfängern mobile Referenzempfänger, insbesondere Fahrzeuge, verwendet werden, die mit einem Empfänger für Signale eines Navigationssystems, beispielsweise einem GPS-Empfänger, und einem Sender zur Übermittlung eines Positionsfehlers in Form von Korrekturdaten ausgestattet sind, und deren korrigierte globale Positionen anhand stationärer Landmarken, wie beispielsweise Pfosten, Ampeln, Leitplanken oder Fahrspurmarkierungen, deren globale Positionen wiederum insbesondere aus einer digitalen Karte bekannt sind, ermittelbar sind.

Im Gegensatz zu stationären Referenzempfängern ist die globale Position eines mobilen Referenzempfängers naturgemäß nicht konstant und/oder nicht von vorneherein bekannt, sondern muss über Umfeldsensorik mit Hilfe einer oder mehrerer Landmarken, deren globale Positionen bekannt sind, ermittelt werden. Mittels der Umfeldsensorik kann insbesondere die relative Lage der erfassten stationären Landmarke zu dem mobilen Referenzempfänger festgestellt werden. Als Umfeldsensoren können beispielsweise ein oder mehrere Abstands-, Radar-, Ultraschall-, Video-, Infrarotsensoren und/oder Laserscanner oder eine beliebige Kombination verschiedener Sensortypen verwendet werden.

Insbesondere bei in einer Richtung ausgedehnten Landmarken wie Fahrspurmarkierungen oder Leitplanken ist in vielen Fällen die globale Position der Landmarken nur in einer Raumrichtung, insbesondere quer zur Fahrtrichtung, bekannt und/oder erfassbar, so dass ein Positionsfehler auch nur für diese Raumrichtung berechnet werden kann. Insbesondere in diesen Fällen wird der Positionsfehler für lediglich wenigstens eine Raumrichtung, insbesondere quer zur Bewegungsrichtung des mobilen Referenzempfängers, berechnet.

Das erfindungsgemäße Verfahren besitzt insbesondere den Vorteil, dass Fahrzeuge, die ohnehin mit einem Empfänger zur Auswertung der Signale eines Navigationssystems und Umfeldsensorik zur Erfassung des Fahrzeugsumfelds für Fahrzeugassistenzsysteme wie beispielsweise ACC (adaptive cruise control), Kollisionsvermeidung, Navigationsunterstützung und automatische Notbremsung ausgestattet sind, den ansonsten nur zum Nutzen des eigenen Fahrzeugs berechneten Positionsfehler an andere Fahrzeuge - insbesondere an Fahrzeuge, die keine Umfeldsensorik aufweisen - übertragen können. Der Positionsfehler kann via Fahrzeug-Fahrzeug-Kommunikation, beispielsweise im Radiofrequenzbereich, an andere Fahrzeuge übermittelt werden.

Mit der Erfindung kann eine ggf. bereits bestehende Referenzempfänger-Dichte stationärer Referenzempfänger erhöht oder bei ausreichend hoher Anzahl an mobilen Referenzempfängern mit Umfeldsensorik und digitaler Karte auch ein eigenes unabhängiges Referenzempfänger-Netz betrieben werden.

Bei dem Navigationssystem kann es sich insbesondere um ein satellitengestütztes Navigationssystem, beispielsweise GPS, grundsätzlich aber auch um ein terrestrisch gestütztes Navigationssystem handeln, das beispielsweise Funk- oder Fernsehtürme als Sendestationen verwendet.

Die Berechnung eines globalen Positionsfehlers ist grundsätzlich bekannt, insbesondere aus DGPS, so dass hierauf im Rahmen der vorliegenden Erfindung nicht näher eingegangen wird.

Vorteilhafte Ausführungsformen der Erfindung sind auch in den Unteransprüchen, der Beschreibung sowie der Zeichnung angegeben.

Nach einer bevorzugten Ausführungsform der Erfindung werden zur Bestimmung der bekannten globalen Position der erfassten stationären Landmarke in Abhängigkeit von der mittels des Navigationssystems bestimmten globalen Position des mobilen Referenzempfängers in einer digitalen Karte ein Ausschnitt der Umgebung der globalen Position des mobilen Referenzempfängers ermittelt und Daten in Bezug auf die erfasste stationäre Landmarke mit Daten aus dem Ausschnitt der digitalen Karte verglichen. Hierdurch kann die Zuordnung der erfassten stationären Landmarke zu dem der erfassten stationären Landmarke entsprechenden Eintrag in der digitalen Karte und dadurch die Bestimmung der bekannten globalen Position der erfassten stationären Landmarke beschleunigt werden. Bei den Daten kann es sich insbesondere um Daten handeln, die die Größe, Form und/oder Reflektivität oder eine andere kennzeichnende Eigenschaft der entsprechenden stationären Landmarke repräsentieren.

Nach einer weiteren bevorzugten Ausführungsform der Erfindung werden während der Bewegung des mobilen Referenzempfängers, insbesondere während der Fahrt eines Fahrzeugs, stationäre Landmarken mittels eines Laserscanners in mehreren aufeinanderfolgenden Zyklen, insbesondere kontinuierlich, erfasst, erkannt und/oder verfolgt. Somit kann eine höhere Anzahl an Daten über das Umfeld des mobilen Referenzempfängers, insbesondere über einzelne stationäre Landmarken, gewonnen werden, so dass, insbesondere wenn mehrere stationäre Landmarken erfasst werden, die Zuordnung der erfassten stationären Landmarke zu dem der erfassten stationären Landmarke entsprechenden Eintrag in der digitalen Karte und dadurch die Bestimmung der bekannten globalen Position der erfassten stationären Landmarke erleichtert und eine hohe Zuordnungssicherheit gewährleistet werden kann. Verfahren zur Erkennung und/oder Verfolgung von Objekten auf der Basis von Abstandsbildern sind grundsätzlich bekannt. Ein Beispiel für ein solches Verfahren ist in Fortschritt-Berichte VDI, Reihe 12, Nr. 438, Kirchner, A., "Sensordatenverarbeitung eines Laserscanners für autonome Fahrfunktionen von Kraftfahrzeugen", VDI Verlag GmbH, Düsseldorf 2000, ISBN 3-18-343812-7, ISSN 0178-9449 beschrieben. Weiterhin findet sich eine Beschreibung eines solchen Verfahrens in der Veröffentlichung von Fürstenberg, K. et al.: "Pedestrian Recognition and Tracking of Vehicles using a Vehicle based Multilayer Laserscanner", Proceedings of ITS 2003, 10th World Congress on Intelligent Transport Systems, November 2003, Madrid, Spanien.

Grundsätzlich können zur Berechnung des Positionsfehlers die bekannte globale Position der erfassten stationären Landmarke einerseits und die aus der mittels des Navigationssystems bestimmten, fehlerbehafteten globalen Position des mobilen Referenzempfängers und der relativen Lage der erfassten stationären Landmarke zu dem mobilen Referenzempfänger ermittelbare globale Position der stationären Landmarke andererseits miteinander verglichen werden. Hierbei werden eine bekannte und eine ermittelte, fehlerbehaftete globale Position der stationären Landmarke miteinander verglichen. Bevorzugt werden zur Berechnung des Positionsfehlers jedoch die mittels des Navigationssystems bestimmte globale Position des mobilen Referenzempfängers einerseits und die aus der bekannten globalen Position der erfassten stationären Landmarke und deren relativen Lage zu dem mobilen Referenzempfänger ermittelbare korrigierte globale Position des mobilen Referenzempfängers andererseits miteinander verglichen. Hierbei werden eine fehlerbehaftete und eine ermittelte korrigierte globale Position des mobilen Referenzempfängers miteinander verglichen. Dies hat den Vorteil, dass eine korrigierte globale Position des mobilen Referenzempfängers vorliegt, die auch zur eigenen Navigationsunterstützung verwendet werden kann.

Grundsätzlich kann bei mehreren erfassten stationären Landmarken für jede der erfassten stationären Landmarken eine eigene korrigierte globale Position des mobilen Referenzempfängers ermittelt und ein eigener Positionsfehler berechnet werden, wobei aus den mehreren berechneten Positionsfehlern ein gemittelter Positionsfehler berechnet werden kann. Bevorzugt wird bei mehreren erfassten stationären Landmarken, insbesondere zur Verminderung der Rechenzeit, jedoch lediglich eine korrigierte globale Position des mobilen Referenzempfängers ermittelt, die zur Berechnung des Positionsfehlers mit der mittels des Navigationssystems bestimmten globalen Position des mobilen Referenzempfängers verglichen wird.

Die Aufgabe wird weiterhin durch ein Verfahren mit den Merkmalen des Anspruchs 6 und insbesondere dadurch gelöst, dass wenigstens ein von zumindest einem mobilen Referenzempfänger für wenigstens eine Raumrichtung berechneter Positionsfehler empfangen wird, und eine korrigierte globale Position des Nutzempfängers für wenigstens eine Raumrichtung anhand des empfangenen Positionsfehlers ermittelt wird.

Hierdurch können Nutzempfänger - insbesondere Nutzempfänger, die keine Umfeldsensorik aufweisen - von mit Umfeldsensorik ausgestatteten mobilen Referenzempfängern berechnete Positionsfehler erhalten, um die eigenen, mittels eines Navigationssystems bestimmten, fehlerbehafteten globalen Positionen korrigieren zu können. Auch ein mobiler Referenzempfänger kann ein Nutzempfänger sein.

Insbesondere kann eine korrigierte globale Position des Nutzempfängers anhand von wenigstens zwei, jeweils für wenigstens eine Raumrichtung und verschiedenen mobilen Referenzempfängern berechneten Positionsfehlern ermittelt werden, wobei insbesondere die Bewegungsrichtungen der mobilen Referenzempfänger und/oder die Raumrichtungen im Wesentlichen senkrecht zueinander verlaufen, z.B. bei kreuzender Brücke. Hierdurch kann erreicht werden, dass ein von einem Referenzempfänger empfangener Positionsfehler, der in lediglich wenigstens einer Raumrichtung berechnet wurde und deshalb zu einer in lediglich wenigstens einer Raumrichtung korrigierten globalen Position führen kann, durch einen von einem weiteren Referenzempfänger berechneten und empfangenen Positionsfehler, der ebenfalls in lediglich wenigstens einer weiteren Raumrichtung berechnet wurde, ergänzt werden kann, um eine Korrektur der globalen Position des Nutzempfängers in mehreren Raumrichtungen zu ermöglichen. Bei dem Nutzempfänger kann es sich auch um einen mobilen Referenzempfänger handeln, der mittels seiner Umfeldsensorik einen Positionsfehler für wenigstens eine Raumrichtung berechnen und von wenigstens einem weiteren mobilen Referenzempfänger einen für wenigstens eine weitere Raumrichtung berechneten Positionsfehler empfangen kann.

Weiterer Gegenstand der Erfindung ist ein Computerprogramm mit Programmcode-Mitteln, um das erfindungsgemäße Verfahren durchzuführen, wenn das Programm auf einem Computer ausgeführt wird.

Gegenstand der Erfindung ist auch ein Computerprogrammprodukt mit Programmcode-Mitteln, die auf einem computerlesbaren Datenträger gespeichert sind, um das erfindungsgemäße Verfahren durchzuführen, wenn das Programm auf einem Computer ausgeführt wird.

Unter einem Computer wird hierbei insbesondere eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Die Aufgabe wird weiterhin gelöst durch eine Vorrichtung mit den Merkmalen des Anspruchs 10 oder 11.

Die Erfindung wird im Folgenden beispielhaft unter Bezugnahme auf die Zeichnung beschrieben. Es zeigen:
- Fig. 1: eine mittels eines Navigationssystems bestimmte und eine korrigierte globale Position eines Referenzempfängers, sowie eine bekannte globale Position einer Landmarke, und
- Fig. 2: eine Draufsicht auf zwei mobile Referenzempfänger, deren Bewegungsrichtungen im Wesentlichen senkrecht zueinander verlaufen.

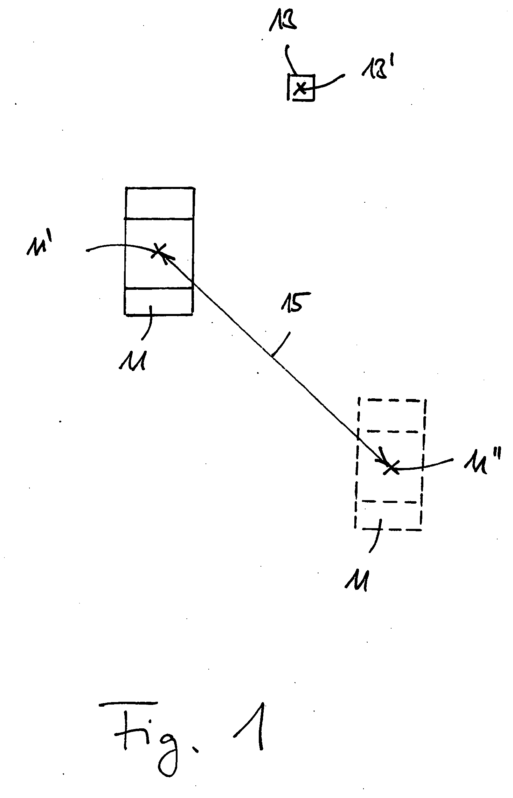

Fig. 1 zeigt die in eine Ebene projizierte, fehlerbehaftete bzw. nicht korrigierte globale Position 11" des Schwerpunkts eines mit einem GPS-Empfänger ausgerüsteten Fahrzeugs 11, die mittels des satellitengestützten Navigationssystems GPS bestimmt wurde. Weiterhin ist die an sich bekannte Position 13' des Schwerpunkts einer sich im nähren Fahrzeugumfeld befindlichen stationären Landmarke, insbesondere eines Pfostens 13, dargestellt.

Das Fahrzeug 11 ist mit einem Laserscanner zur Erfassung, Erkennung und Verfolgung von Objekten, insbesondere stationären Landmarken, sowie einer digitalen Karte ausgestattet, in der die bekannten globalen Positionen von stationären Landmarken eingetragen sind.

Erfindungsgemäß tastet der Laserscanner seinen Sichtbereich mit einem umlaufenden, gepulsten Laserstrahlbündel ab und erfasst dabei den Pfosten 13. Danach vergleicht er durch die Erfassung gewonnene Daten in Bezug auf den Pfosten 13 mit Daten von Einträgen in der digitalen Karte, die stationären Landmarken entsprechen, wobei lediglich Einträge verwendet werden, die sich in einem räumlich begrenzten Ausschnitt der Umgebung der mittels des Navigationssystems bestimmten globalen Position 11" des Fahrzeugs 11 befinden. Hierdurch kann der Pfosten 13 dem dem Pfosten 13 entsprechenden Eintrag in der digitalen Karte zugeordnet und damit die bekannte globale Position 13' des Pfostens 13 bestimmt werden. Zur Erhöhung der Zuordnungssicherheit werden bevorzugt mehrere stationäre Landmarken und deren Anordnung zueinander erfasst und mit entsprechenden Einträgen in der digitalen Karte verglichen, die dieselbe Anordnung aufweisen.

Danach kann mittels einer Datenverarbeitungsvorrichtung aus der derart bestimmten, bekannten globalen Position 13' des Schwerpunkts des Pfostens 13 und der mittels des Laserscanners bestimmten relativen Lage des Pfostens 13 zu dem Fahrzeug 11 die ebenfalls in Fig. 1 verzeichnete korrigierte globale Position 11' des Schwerpunkts des Fahrzeugs 11 ermittelt werden.

Aus der korrigierten globalen Position 11' des Schwerpunkts des Fahrzeugs 11 und der mittels des Navigationssystems bestimmten globalen Position 11" des Schwerpunkts des Fahrzeugs 11 kann dann ein Positionsfehler 15 der mittels des Navigationssystems bestimmten globalen Position 11" des Schwerpunkts des Fahrzeugs 11 berechnet werden.

Anschließend kann der ermittelte Positionsfehler von dem Fahrzeug 11, analog zu einem stationären Referenzempfänger, an andere mit einem GPS-Empfänger ausgestattete Fahrzeuge übermittelt und von diesen empfangen werden, so dass deren fehlerbehaftete, mittels GPS bestimmte globale Positionen mit Hilfe des übermittelten Positionsfehlers, analog zu DGPS, entsprechend korrigiert werden können.

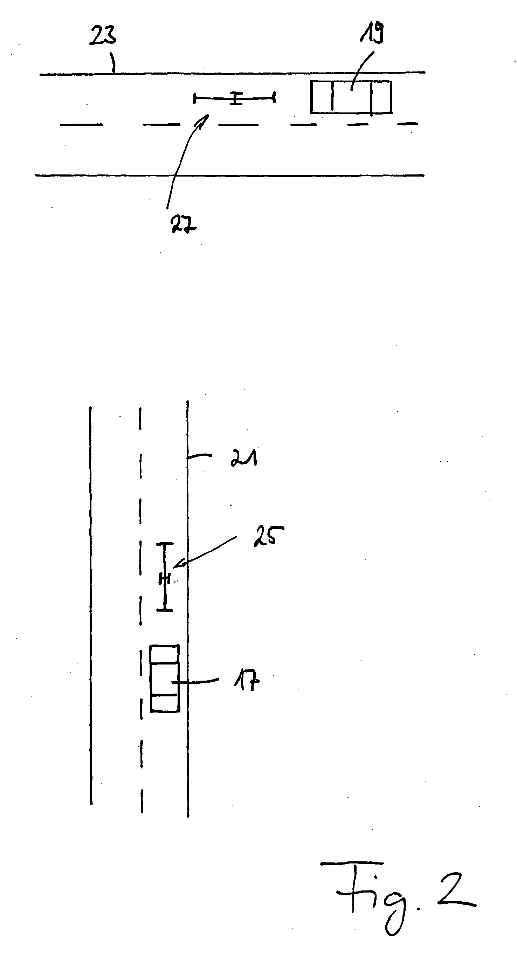

In Fig. 2 sind zwei Fahrzeuge 17 und 19 gezeigt, die jeweils dem Fahrzeug 11 aus Fig. 1 entsprechen und sich zumindest zu einem bestimmten Zeitpunkt oder über eine bestimmte Zeitdauer hinweg im Wesentlichen senkrecht zueinander bewegen. Anstelle des Pfostens 13 aus Fig. 1 werden in Fig. 2 durchgehende Fahrspurmarkierungen 21 und 23 erfasst.

Wie durch in Fahrtrichtung und quer zur Fahrtrichtung dargestellte Fehlerbalken 25 und 27 für die Genauigkeit der Bestimmung der globalen Position verdeutlicht werden soll, kann bei Fahrspurmarkierungen der Positionsfehler lediglich quer zur Fahrtrichtung berechnet werden, da eine exakte globale Position in Fahrtrichtung nicht bekannt und/oder erfassbar ist. Folglich kann die Genauigkeit der Positionsbestimmung in Fahrtrichtung nicht erhöht, quer zur Fahrtrichtung jedoch analog zu der Situation in Fig. 1 erhöht werden.

Werden sowohl der durch Fahrzeug 17 berechnete Positionsfehler, der lediglich hinsichtlich einer Raumrichtung vorliegt, als auch der durch Fahrzeug 19 berechnete Positionsfehler, der ebenfalls lediglich hinsichtlich einer Raumrichtung vorliegt, die im Wesentlichen senkrecht zur ersten Raumrichtung verläuft, an einen bloßen Nutzempfänger, d.h. ein mit einem GPS-Empfänger ausgestattetes Fahrzeug, das keine eigene Umfeldsensorik aufweist, übermittelt, liegt beim Nutzempfänger wieder ein "vollständiger" Positionsfehler vor.

Es ist auch möglich, dass der berechnete "eindimensionale" Positionsfehler der globalen Position des Fahrzeugs 17 an das Fahrzeug 19 und/oder der berechnete "eindimensionale" Positionsfehler der globalen Position des Fahrzeugs 19 an das Fahrzeug 17 übermittelt werden, so dass auch bei Fahrzeug 17 und/oder Fahrzeug 19 ein vollständiger Positionsfehler vorliegt.

Durch die Verwendung von mobilen Referenzempfängern, die mit Umfeldsensorik ausgestattet sind, wird es somit ermöglicht, die Genauigkeit der mittels eines Navigationssystems bestimmten globalen Positionen von Nutzempfängern zu erhöhen.

### Bezugszeichenliste

- 11: Fahrzeug
- 11': korrigierte globale Position
- 11": mittels eines Navigationssystems bestimmte globale Position
- 13: Pfosten
- 13': bekannte globale Position
- 15: Positionsfehler
- 17: Fahrzeug
- 19: Fahrzeug
- 21: Fahrspurmarkierung
- 23: Fahrspurmarkierung
- 25: Fehlerbalken
- 27: Fehlerbalken

## Patentansprüche

1. Verfahren zur Erhöhung der Genauigkeit der mittels eines Navigationssystems bestimmten globalen Position eines Nutzempfängers, bei dem
mittels des Navigationssystems die globale Position (11") eines mobilen Referenzempfängers (11, 17, 19) bestimmt wird,
mittels des mit zumindest einem Umfeldsensor versehenen mobilen Referenzempfängers (11, 17, 19) wenigstens eine stationäre Landmarke (13, 21, 23) erfasst wird, deren globale Position (13') zumindest in einer Raumrichtung bekannt, insbesondere in einer digitalen Karte eingetragen ist,
aus der bekannten globalen Position (13') der erfassten stationären Landmarke (13, 21, 23), deren relativen Lage zu dem mobilen Referenzempfänger (11, 17, 19) und der mittels des Navigationssystems bestimmten globalen Position (11") des mobilen Referenzempfängers (11, 17, 19) ein Positionsfehler (15) der mittels des Navigationssystems bestimmten globalen Position (11") des mobilen Referenzempfängers (11, 17, 19) für wenigstens eine Raumrichtung berechnet wird, und
der berechnete Positionsfehler (15) von dem mobilen Referenzempfänger (11, 17, 19) an den Nutzempfänger zur Erhöhung der Genauigkeit der mittels des Navigationssystems bestimmten globalen Position des Nutzempfängers übermittelt wird.

2. Verfahren nach Anspruch 1,
**dadurch gekennzeichnet, dass**
zur Bestimmung der bekannten globalen Position (13') der erfassten stationären Landmarke (13, 21, 23) in Abhängigkeit von der mittels des Navigationssystems bestimmten globalen Position (11") des mobilen Referenzempfängers (11, 17, 19) in einer digitalen Karte ein Ausschnitt der Umgebung der globalen Position (11") des mobilen Referenzempfängers (11, 17, 19) ermittelt und Daten in Bezug auf die erfasste stationäre Landmarke (13, 21, 23) mit Daten aus dem Ausschnitt der digitalen Karte verglichen werden.

3. Verfahren nach Anspruch 1 oder 2,
**dadurch gekennzeichnet, dass**
während der Bewegung des mobilen Referenzempfängers (11, 17, 19), insbesondere während der Fahrt eines Fahrzeugs, stationäre Landmarken (13, 21, 23) mittels eines Laserscanners in mehreren aufeinanderfolgenden Zyklen, insbesondere kontinuierlich, erfasst, erkannt und/oder verfolgt werden.

4. Verfahren nach zumindest einem der vorstehenden Ansprüche,
**dadurch gekennzeichnet, dass**
zur Berechnung des Positionsfehlers (15) die mittels des Navigationssystems bestimmte globale Position (11") des mobilen Referenzempfängers (11, 17, 19) einerseits und die aus der bekannten globalen Position (13') der erfassten stationären Landmarke (13, 21, 23) und deren relativen Lage zu dem mobilen Referenzempfänger (11, 17, 19) ermittelbare korrigierte globale Position (11') des mobilen Referenzempfängers (11, 17, 19) andererseits miteinander verglichen werden.

5. Verfahren nach Anspruch 4,
**dadurch gekennzeichnet, dass**
bei mehreren erfassten stationären Landmarken (13, 21, 23) lediglich eine korrigierte globale Position (11') des mobilen Referenzempfängers (11, 17, 19) ermittelt wird, die zur Berechnung des Positionsfehlers (15) mit der mittels des Navigationssystems bestimmten globalen Position (11") des mobilen Referenzempfängers (11, 17, 19) verglichen wird.

6. Verfahren zur Erhöhung der Genauigkeit der mittels eines Navigationssystems bestimmten globalen Position eines Nutzempfängers, bei dem
wenigstens ein von zumindest einem mobilen Referenzempfänger (11, 13, 17) für wenigstens eine Raumrichtung berechneter Positionsfehler (15) empfangen wird, und
eine korrigierte globale Position des Nutzempfängers für wenigstens eine Raumrichtung anhand des empfangenen Positionsfehlers (15) ermittelt wird.

7. Verfahren nach Anspruch 6,
**dadurch gekennzeichnet, dass**
eine korrigierte globale Position des Nutzempfängers anhand von wenigstens zwei, jeweils für wenigstens eine Raumrichtung und verschiedenen mobilen Referenzempfängern (17, 19) berechneten Positionsfehlern ermittelt wird, wobei insbesondere die Bewegungsrichtungen der mobilen Referenzempfänger (17, 19) und/oder die Raumrichtungen im Wesentlichen senkrecht zueinander verlaufen.

8. Computerprogramm mit Programmcode-Mitteln, um das Verfahren nach zumindest einem der Ansprüche 1 bis 7 durchzuführen, wenn das Computerprogramm auf einem Computer ausgeführt wird.

9. Computerprogrammprodukt mit Programmcode-Mitteln eines Computerprogramms, die auf einem computerlesbaren Datenträger gespeichert sind, um das Verfahren nach zumindest einem der Ansprüche 1 bis 7 durchzuführen, wenn das Computerprogramm auf einem Computer ausgeführt wird.

10. Mobiler Referenzempfänger zur Erhöhung der Genauigkeit der mittels eines Navigationssystems bestimmten globalen Position eines Nutzempfängers, mit Mitteln zur Durchführung des Verfahrens nach zumindest einem der Ansprüche 1 bis 5.

11. Nutzempfänger zur Erhöhung der Genauigkeit der mittels eines Navigationssystems bestimmten globalen Position des Nutzempfängers, mit Mitteln zur Durchführung des Verfahrens nach Anspruch 6 oder 7.

## Claims

1. A method for increasing the accuracy of the global position of a user receiver determined by means of a navigation system, wherein
the global position (11") of a mobile reference receiver (11, 17, 19) is determined by means of the navigation system;
at least one stationary landmark (13, 21, 23) is detected by means of the mobile reference receiver (11, 17, 19) provided with at least one environment sensor, the global position (13') of said landmark being known in at least one spatial direction, in particular entered in a digital map;
a position error (15) of the global position (11") of the mobile reference receiver (11, 17, 19) determined by means of the navigation system is calculated for at least one spatial direction from the known global position (13') of the detected stationary landmark (13, 21, 23), from its relative position to the mobile reference receiver (11, 17, 19) and from the global position (11") of the mobile reference receiver (11, 17, 19) determined by means of the navigation system; and
the calculated position error (15) is transmitted from the mobile reference receiver (11, 17, 19) to the user receiver to increase the accuracy of the global position of the user receiver determined by means of the navigation system.

2. A method in accordance with claim 1, **characterized in that** ,to determine the known global position (13') of the detected stationary landmark (13, 21, 31) in dependence on the global position (11") of the mobile reference receiver (11, 17, 19) in a digital map determined by means of the navigation system, a section of the environment of the global position (11") of the mobile reference receiver (11, 17, 19) is determined and data with respect to the detected stationary landmark (13, 21, 23) are compared with data from the section of the digital map.

3. A method in accordance with claim 1 or claim 2, **characterized in that** stationary landmarks (13, 21, 23) are detected, recognized and/or tracked in a plurality of sequential cycles, in particular continuously, by means of a laser scanner during the movement of the mobile reference receiver (11, 17, 19), in particular during the travel of a vehicle.

4. A method in accordance with at least one of the preceding claims, **characterized in that** the global position (11") of the mobile reference receiver (11, 17, 19) determined by means of the navigation system, on the one hand, and the corrected global position (11') of the mobile reference receiver (11, 17, 19) which can be determined from the known global position (13') of the detected stationary landmark (13, 21, 23) and its relative position with respect to the mobile reference receiver (11, 17, 19), on the other hand, are compared with one another to calculate the position error (15).

5. A method in accordance with claim 4, **characterized in that**, with a plurality of detected stationary landmarks (13, 21, 23), only a corrected global position (11') of the mobile reference receiver (11, 17, 19) is determined and is compared with the global position (11") of the mobile reference receiver (11, 17, 19) determined by means of the navigation system to calculate the position error (15).

6. A method of increasing the accuracy of the global position of a user receiver determined by means of a navigation system, wherein
at least one position error (15) calculated for at least one spatial direction is received from at least one mobile reference receiver (11, 13, 17); and
a corrected global position of the user receiver for at least one spatial direction is determined with reference to the received position error (15).

7. A method in accordance with claim 6, **characterized in that** a corrected global position of the user receiver is determined with reference to at least two position errors calculated in each case for at least one spatial direction and from at least two different mobile reference receivers (17, 19), with in particular the directions of movement of the mobile reference receivers (17, 19) and/or the spatial directions extending substantially perpendicular to one another.

8. A computer program with program code means to carry out the method in accordance with at least one of the claims 1 to 7, when the computer program is carried out on a computer.

9. A computer program product with program code means of a computer program which are stored on a computer legible data carrier to carry out the method in accordance with at least one of the claims 1 to 7, when the computer program is carried out on a computer.

10. A mobile reference receiver to increase the accuracy of the global position of a user receiver determined by means of a navigating system comprising means for the carrying out of the method in accordance with at least one of claims 1 to 5.

11. A user receiver to increase the accuracy of the global position of the user receiver determined by means of a navigation system comprising means to carry out the method in accordance with claim 6 or claim 7.

## Revendications

1. Procédé pour augmenter la précision de la position globale, déterminée par un système de navigation, d'un récepteur-utilisateur, dans lequel
la position globale (11") d'un récepteur de référence mobile (11, 17, 19) est déterminée au moyen du système de navigation,
au moins un repère stationnaire (13, 21, 23) est détecté au moyen du récepteur de référence mobile (11, 17, 19) pourvu d'au moins un capteur d'environnement, repère dont la position globale (13') est connue dans au moins une direction dans l'espace, et est en particulier enregistrée dans une carte numérique,
à partir de la position globale connue (13') du repère stationnaire détecté (13, 21, 23), dont la position relative par rapport au récepteur de référence mobile (11, 17, 19) et à partir de la position globale (11"), déterminée au moyen du système de navigation, du récepteur de référence mobile (11, 17, 19), on calcule une erreur de position (15) de la position globale (11"), déterminée au moyen du système de navigation, du récepteur de référence mobile (11, 17, 19) pour au moins une direction dans l'espace, et
l'erreur de position calculée (15) est transmise depuis le récepteur de référence mobile (11, 17, 19) au récepteur-utilisateur pour augmenter la précision de la position globale, déterminée au moyen du système de navigation, du récepteur-utilisateur.

2. Procédé selon la revendication 1,
**caractérisé en ce que,** pour déterminer la position globale connue (13') du repère stationnaire détecté (13, 21, 23) en fonction de la position globale (11"), déterminée au moyen du système de navigation, du récepteur de référence mobile (11, 17, 19) dans une carte numérique, on détermine un extrait de l'environnement de la position globale (11 ") du récepteur de référence mobile (11, 17, 19), et on compare des données qui se réfèrent au repère stationnaire détecté (13, 21, 23) à des données provenant de l'extrait de la carte numérique.

3. Procédé selon la revendication 1 ou 2,
**caractérisé en ce que**, pendant le déplacement du récepteur de référence mobile (11, 17, 19), en particulier pendant la circulation d'un véhicule automobile, des repères stationnaires (13, 21, 23) sont détectés, reconnus et/ou suivis au moyen d'un scanneur à laser dans plusieurs cycles successifs, en particulier en continu.

4. Procédé selon l'une au moins des revendications précédentes,
**caractérisé en ce que**, pour calculer l'erreur de position (15), la position globale (11"), déterminée au moyen du système de navigation, du récepteur de référence mobile (11, 17, 19) d'une part et la position globale (11'), du récepteur de référence mobile (11, 17, 19), susceptible d'être déterminée à partir de la position globale connue (13') du repère stationnaire détecté (13, 21, 23) et à partir de sa position relative par rapport au récepteur de référence mobile (11, 17, 19) d'autre part sont comparées l'une avec l'autre.

5. Procédé selon la revendication 4,
**caractérisé en ce que**, lorsqu'on détecte plusieurs repères stationnaires (13, 21, 23), on détermine simplement une position globale corrigée (11') du récepteur de référence mobile (11, 17, 19), qui est comparée à la position globale (11"), déterminée au moyen du système de navigation, du récepteur de référence mobile (11, 17, 19), pour calculer l'erreur de position (15).

6. Procédé pour augmenter l'exactitude de la position globale, déterminée au moyen d'un système de navigation, d'un récepteur-utilisateur, dans lequel
au moins une erreur de position (15), calculée pour au moins une direction dans l'espace, est reçue par au moins un récepteur de référence mobile (11, 13, 17), et
une position globale corrigée du récepteur-utilisateur est déterminée pour au moins une direction dans l'espace au moyen de l'erreur de position reçue (15).

7. Procédé selon la revendication 6,
**caractérisé en ce que** l'on détermine une position globale corrigée du récepteur-utilisateur au moyen d'au moins deux erreurs de position, calculées chacune pour au moins une direction dans l'espace et pour des récepteurs de référence mobiles différents (17, 19), dans lequel les directions de déplacement du récepteur de référence mobile (17, 19) et/ou les directions dans l'espace s'étendent en particulier sensiblement perpendiculairement l'une à l'autre.

8. Programme d'ordinateur comprenant des moyens formant code de programme, pour mettre en oeuvre le procédé selon l'une au moins des revendications 1 à 7 quand le programme d'ordinateur est exécuté sur un ordinateur.

9. Produit de programme d'ordinateur comprenant des moyens formant code de programme d'un programme d'ordinateur, mémorisés sur un support de données lisible à l'ordinateur, pour mettre en oeuvre le procédé selon l'une au moins des revendications 1 à 7 quand le programme d'ordinateur est exécuté sur un ordinateur.

10. Récepteur de référence mobile pour augmenter l'exactitude de la position globale, déterminée au moyen d'un système de navigation, d'un récepteur-utilisateur, comprenant des moyens pour mettre en oeuvre le procédé selon l'une au moins des revendications 1 à 5.

11. Récepteur-utilisateur pour augmenter la précision de la position globale, déterminée au moyen d'un système de navigation, du récepteur-utilisateur, comprenant des moyens pour mettre en oeuvre le procédé selon la revendication 6 ou 7.
